# EUROPÄISCHE PATENTSCHRIFT

(11) **EP 0 439 241 B1**
(45) Veröffentlichungstag und Bekanntmachung des Hinweises auf die Patenterteilung: **01.03.1995**
(21) Anmeldenummer: 91250012.1
(22) Anmeldetag: 22.01.1991
(51) Int. Cl.: B65G 47/91, B25J 15/06, B65H 7/16, B65H 5/14

(54) **Handhabungsvorrichtung mit einem Sauggreifer**
Handling apparatus with a suction cup
Appareil de manipulation avec une ventouse

(30) Priorität: 24.01.1990 DE 4001937
(43) Veröffentlichungstag der Anmeldung: 31.07.1991
(73) Patentinhaber: MANNESMANN Aktiengesellschaft, 40027 Düsseldorf (DE)
(72) Erfinder: Goedecke, Wolf-Dieter, Prof.Dr.-Ing., W-7731 Unterkirnach (DE); Cohanciuc, Victor, W-7730 Villingen-Schwenningen (DE)
(74) Vertreter: Presting, Hans-Joachim, Dipl.-Ing.

(56) Entgegenhaltungen:
- EP-A- 0 220 407
- DE-A- 2 030 044
- DE-A- 3 530 019

## Beschreibung

Die Erfindung betrifft eine Handhabungsvorrichtung mit einem Sauggreifer zum Ergreifen von Werkstücken mittels Unterdruck, bei dem in einem mit dem Sauggreifer verbundenen Gehäuse Mittel zum Erzeugen oder Zuführen eines Unterdrucks sowie mindestens ein Ventil angeordnet sind, mittels dessen der Sauggreifer mit dem Unterdruck beaufschlagbar ist.

Eine Handhabungsvorrichtung der vorstehend genannten Art ist aus der Handhabungstechnik allgemein bekannt.

In der Handhabungstechnik werden Werkstücke oder Bauteile mittels Greifern ergriffen und verfahren und/oder gehandhabt, die ihrerseits an sogenannten Linearachsen oder Drehachsen angeordnet sind. Auf diese Weise ist es möglich, die Werkstücke oder Bauteile von einem ersten definierten Punkt zu einem zweiten definierten Punkt zu transportieren und dabei ggf. durch Drehung oder dgl. auch zu orientieren. Ferner ist es auf diese Weise möglich, beispielsweise zum Fügen von Werkstücken verschiedene Bauteile zusammenzubringen und dann miteinander zu verbinden, indem beispielsweise Schrauben in entsprechende Gewindebohrungen eingeschraubt, Bauteile eines Werkstücks zusammengesteckt oder elektrische bzw. elektronische Bauelemente mit ihren Anschlüssen in vorbereitete Bohrungen einer Leiterplatte eingesetzt werden.

Zum Ergreifen der Werkstücke oder Bauteile ist es dabei bekannt, diese durch Kraft- oder Formschluß zu ergreifen. Bei besonderen Anwendungsfällen, insbesondere dann, wenn es sich um größere Werkstücke oder Bauteile mit glatten Oberflächen handelt, ist es auch bekannt, zum Ergreifen der Werkstücke einen Sauggreifer einzusetzen. Unter einem Sauggreifer versteht man dabei ein an einem Ende eines Armes angeordnetes, kugelkalottenförmiges Bauteil aus Gummi oder elastischem Kunststoff, das nach Art eines Saugnapfes auf die glatte Oberfläche des Werkstücks oder Bauteils aufgesetzt wird, um dann den Innenraum des Saugnapfes über eine Unterdruckleitung zu evakuieren. Das Werkstück oder Bauteil wird auf diese Weise mittels Unterdruck gehalten und kann transportiert und/oder gedreht werden. Wenn das Werkstück oder Bauteil losgelassen werden soll, wird entweder der Unterdruck unter dem Sauggreifer durch Umgebungsdruck ersetzt oder aber es wird sogar zum beschleunigten Lösen kurzzeitig ein Überdruck unter den Sauggreifer geleitet.

Bekannte Handhabungsvorrichtungen mit Sauggreifern sind großvolumig ausgebildet und daher zum Handhaben von kleineren Werkstücken oder Bauteilen ungeeignet, zumal dann, wenn sich in unmittelbarer Nähe der Handhabungsvorrichtung noch weitere Aggregate befinden. Hinsichtlich ihrer Funktion sind die bekannten Handhabungsvorrichtungen darauf beschränkt, die Werkstücke oder Bauteile in der genannten Weise zu transportieren, zu orientieren oder zu fügen.

Der Erfindung liegt demgegenüber die Aufgabe zugrunde, eine Handhabungsvorrichtung sowie ein Verfahren der eingangs genannten Art dahingehend weiterzubilden, daß durch einen extrem kompakten Aufbau eine Handhabungsvorrichtung mit einem Sauggreifer auf sehr kleinem Raum untergebracht werden kann, so daß weitere Aggregate in unmittelbarer Nähe der Handhabungsvorrichtung angeordnet werden können. Auch soll es möglich sein, die Funktion der Handhabungsvorrichtung nicht nur auf das Transportieren, Handhaben oder Fügen der Werkstücke oder Bauelemente zu beschränken.

Diese Aufgabe wird nach der eingangs genannten Handhabungsvorrichtung erfindungsgemäß dadurch gelöst, daß das Gehäuse scheibenartig ausgebildet und mit einem integrierten Kanalsystem versehen ist, das einen Verteilerkanal aufweist, der so in eine Oberfläche des Gehäuses geführt ist, daß das Gehäuse mit weiteren Gehäusen zu einem Ventilbatterieblock zusammenfügbar ist, bei dem die Verteilerkanäle der Gehäuse aneinanderstoßen und die Kanalsysteme miteinander kommunizieren.

Durch Integration der für die Unterdruckerzeugung bzw. -verteilung benötigten pneumatischen Bauelemente in ein scheibenförmiges Gehäuse ist es nämlich in vorteilhafter Weise möglich, Blockanordnungen zu erhalten, bei denen die Unterdruckfunktionen zum Steuern des Sauggreifers nur noch innerhalb einer Scheibe des Blockes untergebracht sind. Weitere Funktionen der Handhabungsvorrichtung, beispielsweise die Steuerung von Linear- oder Drehachsen, von Kurzhubgreifern oder dgl. können dann in vorteilhafter Weise durch die weiteren Scheiben des Blocks gesteuert werden. Der Verdrahtungs- bzw. Verschlauchungsaufwand ist dabei minimiert, weil durch das Aneinandersetzen der Scheiben des Blocks ein durchgängiges Kanalsystem entsteht, bei dem die erforderlichen Unter- oder Überdrücke durch einen gemeinsamen Anschluß für alle Scheiben des Blocks zur Verfügung gestellt werden können, sofern nicht beispielsweise ein Unterdruck durch geeignete Mittel innerhalb der für die Unterdruckerzeugung vorgesehenen Scheibe des Blocks mittels überdruckbetätigten Bauelementen selbst erzeugt wird. Infolge dieses integrierten Kanalsystems ist es ferner möglich, die betreffende Scheibe des Blocks durch äußere Ansteuerung mit unterschiedlichen Versorgungsdrücken zu beaufschlagen.

Dadurch, daß der am Sauggreifer wirkende Unterdruck erfaßt wird, kann darüberhinaus in manchen Fällen zugleich mit der Handhabung des Werkstücks eine Überprüfung desselben vorgenommen werden. Dies gilt dann, wenn es sich um ein Werkstück handelt, das seinerseits im Betrieb bestimmungsgemäß von einem Fluid durchströmt wird, wie dies beispielsweise bei Filtern, Düsen und dgl. der Fall ist. Wenn man in diesem Fall erfindungsgemäß den Sauggreifer an einer Oberfläche des Werkstücks angreifen läßt, in dem sich gerade die Durchströmöffnung des Werkstücks befindet, sei es die Einström- oder die Abströmöffnung, so tritt ein bestimmter Druckverlust unter dem Sauggreifer ein, weil infolge des wirksamen Unterdrucks das Werkstück von Luft durchströmt wird. Mißt man nun die sich einstellende Druckänderung an der Unterdruckleitung, so ist dies ein Kriterium dafür, ob das gehandhabte Bauelement auch hinsichtlich seiner Funktion einer vorgegebenen Spezifikation entspricht.

Man kann daher erhebliche Zeit einsparen, wenn die Arbeitsgänge des Handhabens und des fluidischen Überprüfens gleichzeitig ablaufen.

Bei einer bevorzugten Ausgestaltung der erfindungsgemäßen Handhabungsvorrichtung weist das Gehäuse einen fensterartigen Abschnitt auf, in dem die Ventile angeordnet sind.

Diese Maßnahme hat den Vorteil, daß das Gehäuse einerseits einen massiven Bereich enthält, in dem das Kanalsystem untergebracht ist, während andererseits in einem fensterartigen Durchbruch oder Ausschnitt Raum für die erforderlichen Bauteile ist. Die Bauteile können aufgrunddessen auch in einfacher Weise montiert und ggf. für Wartungs- und Reparaturarbeiten wieder entnommen werden.

Bei einer bevorzugten Ausgestaltung der Erfindung sind Mittel zum Einstellen des Unterdrucks vorgesehen.

Diese Maßnahme hat den Vorteil, daß der Unterdruck - gesteuert oder geregelt - in weiten Bereichen vorgegeben oder ggf. korrigiert werden kann. So kann z.B. beim Handhaben schwerer Gegenstände ein hoher Unterdruck eingestellt bzw. ein unzureichender Unterdruck erhöht werden, während zum Handhaben leichter Gegenstände, z.B. von Papierbögen, ein niedriger Unterdruck eingestellt bzw. ein zu hoher Unterdruck vermindert werden kann. Der Unterdruck kann dabei programmiert eingestellt werden.

Bei einer weiteren bevorzugten Ausgestaltung der Erfindung enthält das Gehäuse einen Drucksensor, der an eine zum Sauggreifer führende Unterdruckleitung angeschlossen ist.

Diese Maßnahme hat den Vorteil, daß die Funktion des Sauggreifers in einfacher Weise überwacht werden kann, indem beispielsweise an den Drucksensor eine Schwellwertstufe sowie ein Anzeigeelement angeschlossen werden. Wenn dann der Sauggreifer nicht mehr korrekt am Werkstück oder Bauteil angreift, kann sich unterhalb des Sauggreifers kein ausreichender Unterdruck ausbilden, weil z.B. Leckluft an die Unterseite des Sauggreifers strömt. In diesem Falle würde der in dem Gehäuse enthaltene Drucksensor nur einen geringen Unterdruckwert messen und es könnte über die Schwellwertstufe das Anzeigemittel angesteuert werden, um eine Fehlfunktion der Handhabungsvorrichtung anzuzeigen.

Besonders bevorzugt ist bei diesem Ausführungsbeispiel, wenn der Drucksensor mit einem Regler zum Einstellen des Unterdrucks in Verbindung steht.

Diese Maßnahme hat den Vorteil, daß unabhängig von Variationen der Betriebsbedingungen, beispielsweise unabhängig von der Oberflächenrauhigkeit des zu ergreifenden Werkstücks und damit Variationen der unter den Sauggreifer strömenden Leckluft immer derselbe Unterdruck eingestellt werden kann, weil bei rauheren Oberflächen bzw. größeren Leckraten durch Nachstellen des Reglers eine entsprechend höhere Saugleistung an die Unterdruckleitung angeschlossen werden kann.

Bei einer Gruppe von Ausführungsbeispielen ist das Ventil, mittels dessen der Sauggreifer mit Unterdruck beaufschlagbar ist, ein Servo-Ventil.

Diese Maßnahme hat den Vorteil, daß durch den in ein derartiges Ventil integrierten internen Regelkreis ein bestimmter Ausgangsdruck konstant gehalten wird, dessen Größe zusätzlich durch externe Schaltmaßnahmen festgelegt werden kann.

Bei einer Gruppe von Ausführungsbeispielen enthält das Gehäuse eine Venturi-Düse, deren Druckanschluß über ein Ventil an den mit Druckluft beaufschlagten Verteilerkanal anschließbar ist und deren Sauganschluß mit dem Sauggreifer in Verbindung steht.

Diese Maßnahme hat den Vorteil, daß der für die Betätigung des Sauggreifers erforderliche Unterdruck in dem scheibenartigen Gehäuse selbst mittels eines Überdrucks erzeugt werden kann, der für andere Aufgaben benachbarter Scheiben des Blocks ohnehin vorhanden ist, so daß die separate Zuführung eines Unterdrucks nicht erforderlich ist.

Bei einer anderen Gruppe von Ausführungsbeispielen weist das Gehäuse indes einen Unterdruckanschluß auf, der über ein Ventil mit dem Sauggreifer in Verbindung steht.

Diese Maßnahme hat zwar, wie bereits vorstehend erwähnt, den Nachteil, daß ein externer Unterdruckanschluß erforderlich ist, andererseits ergibt sich dabei der Vorteil, daß keine besonderen Maßnahmen getroffen werden müssen, um die aus einer Venturi-Düse abströmende Luft schalldämpfend behandeln oder sammeln und abführen zu müssen.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Ausführungsbeispiels einer erfindungsgemäßen Handhabungsvorrichtung;
- Fig. 2: eine erste Variante eines elektrisch/pneumatischen Schaltbildes für die Handhabungsvorrichtung gemäß Fig. 1;
- Fig. 3: eine zweite Variante eines Schaltbildes, ähnlich dem der Fig. 2;
- Fig. 4: eine schematisierte Seitenansicht der in Fig. 1 gezeigten Handhabungsvorrichtung bei der Ausführung des erfindungsgemäßen Verfahrens.

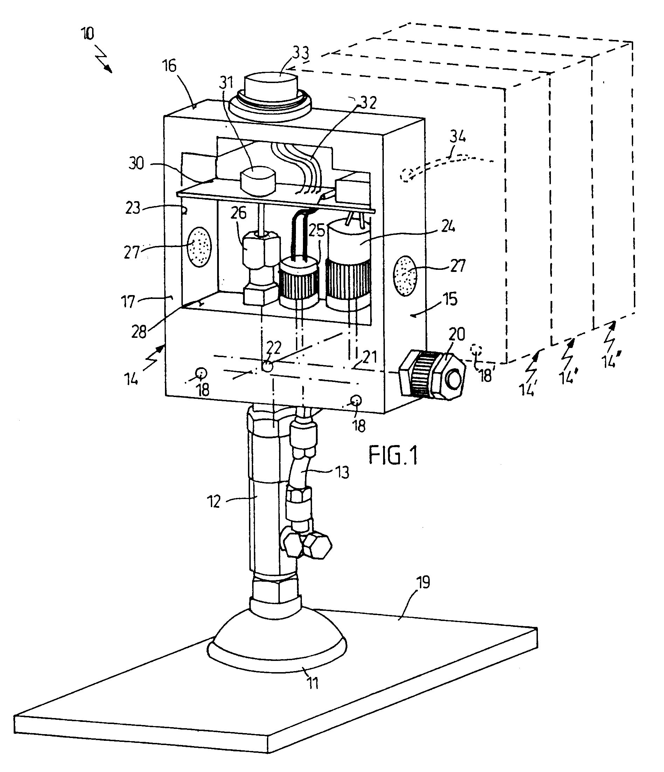

In Fig. 1 bezeichnet 10 ingesamt eine Unterdruckbatterie, wie sie erfindungsgemäß in einer modularen Handhabungsvorrichtung eingesetzt werden soll.

Die Unterdruckbatterie 10 umfaßt einen Sauggreifer 11, der über eine erste, starre Leitung 12 sowie eine zweite, flexible Leitung 13 mit einem Gehäuse 14 verbunden ist. Das Gehäuse 14 weist seitliche Schmalseiten 15, obere und untere Schmalseiten 16 sowie Breitseiten 17 auf. Es besitzt damit eine scheibenartige Gestalt.

Mit 18 sind Befestigungsbohrungen in den Breitseiten 17 angedeutet, um zu zeigen, daß das Gehäuse 14 mit weiteren Gehäusen 14', 14'' und 14''' zu einem Block zusammengefaßt werden kann. Ein Magnetventilbatterieblock dieser Art ist Gegenstand der prioritätsälteren, jedoch nicht vorveröffentlichten Patentanmeldung P 39 17 242.2 der selben Anmelderin, deren Offenbarungsgehalt durch diese Bezugnahme auch zum Offenbarungsgehalt der vorliegenden Anmeldung gemacht wird.

Der Sauggreifer 11 besteht im wesentlichen aus einem kugelkalottenförmigen Bauelement aus Gummi oder elastischem Kunststoff, das nach Art eines Saugnapfes auf ein Werkstück 19 oder ein Bauteil aufgesetzt werden kann. Über die Leitung 12 kann nun unter dem Sauggreifer 11 ein Unterdruck erzeugt werden, so daß das Werkstück 10 angesaugt und mittels Unterdruck gehalten werden kann. Die Unterdruckbatterie 10 ist Bestandteil eines Handhabungssystems, d.h. sie befindet sich an einer Linear- oder Drehachse oder einer Kombination aus Linear- und/oder Drehachsen, so daß die Unterdruckbatterie 10 mitsamt dem ergriffenen Werkstück 19 entlang beliebiger Koordinatenrichtungen im Raum verfahrbar ist, um Transport- oder Fügeaufgaben ausführen zu können. Die erste, starre Leitung 12 übernimmt dabei zugleich die mechanische Halterung des Werkstücks 19.

Mit 20 ist in Fig. 1 ein zentraler Druckluftanschluß bezeichnet, der mit einem Kanalsystem 21 zusammenarbeitet, das vorzugsweise in einem massiv ausgebildeten Abschnitt des Gehäuses 14 durch entsprechende Bohrungen ausgebildet ist. Während dieses Kanalsystem 21 im wesentlichen in eine Richtung zwischen den seitlichen Schmalseiten 15 verläuft, erstreckt sich in eine Richtung senkrecht dazu und damit auch senkrecht zu den Breitseiten 17 ein Verteilerkanal 22, der in entsprechende Öffnungen in den Breitseiten 17 mündet. Wenn nun mittels der Befestigungsbohrungen 18 mehrere Gehäuse 14, 14', 14'' und 14''' aneinandergeschraubt werden, so liegen die Öffnungen der Verteilerkanäle 22 aufeinander und es entsteht damit ein durch alle Gehäuse 14, 14', 14'' und 14''' durchgehendes, kommunizierendes Kanalsystem, das ingesamt vom Druckluftanschluß 20 zentral mit Druckluft beaufschlagt werden kann. Selbstverständlich ist in entsprechender Weise möglich, mehrere Kanalsysteme für unterschiedliche Überdruckwerte oder für Überdruck- sowie Unterdruckwerte oder für die Abluft aus Ventilen oder dgl. vorzusehen, wie wohl keiner näheren Erläuterung bedarf.

In dem ansonsten massiven Gehäuse 14 ist ein fensterartiger Ausschnitt 23 vorgesehen, in dem zum einen pneumatische Bauelemente, nämliche Ventile 24, 25 sowie ein Drucksensor 26 angeordnet sind. Außerdem führen vom fensterartigen Ausschnitt 23 Schalldämpfer 27 durch die seitlichen Schmalseiten 15 nach außen, um Abluft geräuscharm abströmen lassen zu können, die von den pneumatischen Bauelementen 24, 25, 26 in den durch den fensterartigen Ausschnitt 23 gebildeten Raum abströmen.

Die pneumatischen Bauelemente 24, 25, 26 sind bevorzugt als Einschraubbauelemente ausgebildet, die in eine Oberfläche 28 des fensterartigen Ausschnitts 23 eingeschraubt sind und von dort aus mit dem Kanalsystem 21 in Verbindung stehen, wie in Fig. 1 mit strichpunktierten Linien angedeutet. Entsprechendes gilt für den Anschluß der Leitungen 12 und 13.

Im oberen Teil des fensterartigen Ausschnittes 23 befindet sich eine Leiterplatte 30, die in seitliche Nuten des fensterartigen Ausschnitts 23 eingeschoben ist. Die Leiterplatte 30 trägt elektronische Bauelemente 31, beispielsweise Vorverstärker, Schwellwertstufen, Treiberstufen und dgl. und ist über ein Flachbandkabel 32 mit einem elektrischen Steckanschluß 33 verbunden. Die Leiterplatte 30 kann ferner über in Fig. 1 nicht dargestellte Leitungen mit ebenfalls nicht dargestellten Leuchtdioden verbunden sein, die z.B. an der oberen Schmalseite 16 angeordnet sind, um Betriebszustände der Unterdruckbatterie 10 optisch anzuzeigen.

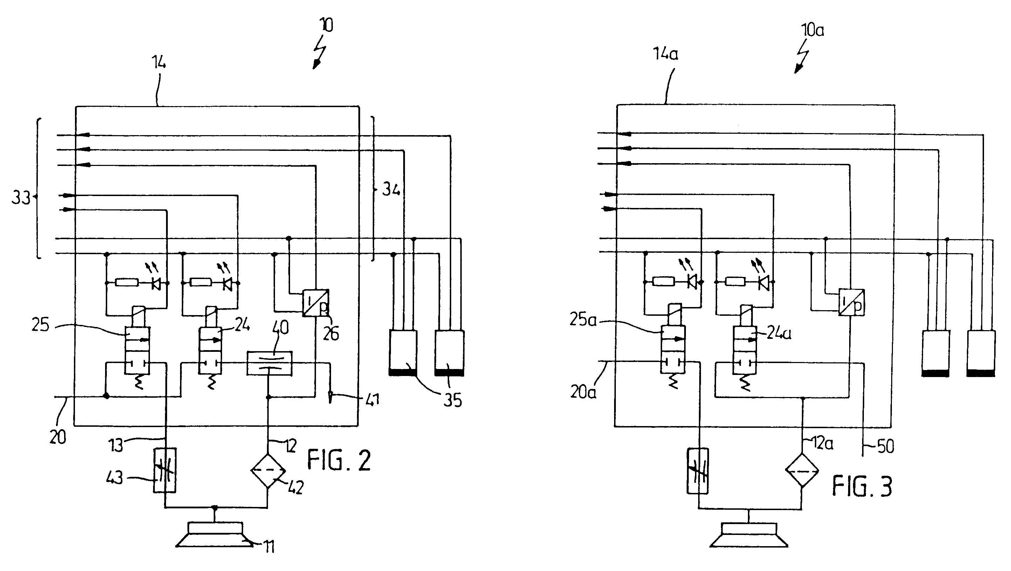

An einer seitlichen Schmalseite 15 kann ferner ein Anschluß 34 in Form eines Kabels vorgesehen sein, der zu Näherungsschaltern führt, wie sie mit 35 in Fig. 2 angedeutet sind. Die Näherungsschalter 35 können Grenzfunktionen realisieren, mit denen z.B. eine Kollision von Bauelementen des Handhabungssystems vermieden wird.

Fig. 2 zeigt ein erstes Ausführungsbeispiel für einen elektrisch/pneumatischen Schaltplan einer Unterdruckbatterie 10.

Die im elektrischen Steckanschluß 33 in einer Stromschnittstelle zusammengefaßten Anschlüsse umfassen beim Ausführungsbeispiel der Fig. 2 insgesamt sieben Leitungen, die über ein entsprechendes Kabel mit einer speicherprogrammierbaren Steuerung (SPS) verbunden sind. Die oberen drei Leitungen geben dabei die Ausgangssignale der Näherungsschalter 35 sowie des Drucksensors 26 wieder. Das Signal des Drucksensors 26 kann beispielsweise zwischen 4 und 20 mA differieren. Die mittleren beiden Leitungen sind den Ausgängen der SPS zugeordnet und dienen zum Ansteuern der Ventile 24 und 25. Die unteren beiden Leitungen sind Versorgungsleitungen und führen beispielsweise 24 V Gleichspannung.

Im pneumatischen Teil der Fig. 2 führt der gemeinsame Druckluftanschluß 20 zu den 2/2-Magnetventilen 24 und 25, die über die SPS-Ausgänge betätigbar sind.

Das Magnetventil 24 erlaubt es, den gemeinsamen Druckluftanschluß 20 an einen Eingang einer Venturi-Düse 40 zu schalten, deren Ausgang mit einem Druckauslaß 41 verbunden ist. Der sich in der Venturi-Düse 40 aufbauende Unterdruck wird an der ersten, starren Leitung 12 abgegriffen und gelangt über ein Filter 42 zum Sauggreifer 11. Das Filter 42 kann in die starre Leitung 12 integriert sein. Auf diese Weise kann mittels eines Überdrucks der gewünschte Unterdruck innerhalb des Gehäuses 14 erzeugt werden.

Das andere Ventil 25 ist ebenfalls ein 2/2-Ventil und gestattet es, den zentralen Druckluftanschluß 20 über eine Drossel 43 ebenfalls mit dem Sauggreifer 11 zu verbinden. Dies geschieht dann, wenn das Werkstück 19 vom Sauggreifer 11 abgeblasen und damit beschleunigt gelöst werden soll.

Der Unterdruck in der ersten Leitung 12 wird über den Drucksensor 26 erfaßt, dessen Ausgangssignal einem Eingang der SPS zugeführt wird. Es ist leicht erkennbar, daß dann, wenn eine Störung am Sauggreifer 11 eintritt, sich kein ausreichender Unterdruck in der zweiten Leitung 13 aufbauen kann und dies über den Drucksensor 26 erkannt und an die SPS weitergemeldet wird. Entsprechendes gilt, wenn im Einzelfall ein zu hoher Unterdruck wirksam sein sollte, der z.B. dazu führen kann, einen angesaugten Papierbogen zu knittern. In der SPS kann sich z.B. ein Schwellwertschalter befinden, der bei einem bestimmten vorgegebenen Grenzwert ein Alarmsignal auslöst.

Andererseits ist es möglich, den Drucksensor 26 in der SPS mit einem Regler zusammenwirken zu lassen, der den Druck am Druckluftanschluß 20 in entsprechender Weise einstellt, damit in der ersten Leitung 12 stets ein konstanter Unterdruck herrscht, unabhängig davon, welche Arbeitsbedingungen am Sauggreifer 11 vorliegen.

Eine weitere Möglichkeit, einen geregelten Unterdruck einzustellen, besteht darin, ein eingebautes Servo-Ventil, z.B. ein Druckservoventil vorzusehen. Das Druckservoventil kann über den gemeinsamen Steckanschluß 33 elektrisch angesteuert werden. Mit dem Druckservoventil ist es möglich, unterschiedliche Unterdrücke von einer übergeordneten Steuerung elektrisch vorzugeben.

Mittels der Drossel 43 kann beim Abblasen des Werkstücks 19 der Belüftungsstrom dosiert werden. Die Drossel 43 kann in die flexible Leitung 13 integriert sein, sie kann sich aber, ebenso wie das Filter 42, auch im Gehäuse 14 befinden.

Bei der in Fig. 3 dargestellten Variante sind dieselben Bezugszeichen wie in Fig. 1 und 2 verwendet worden, es wurde lediglich jeweils ein "a" hinzugefügt.

Die Variante der Fig. 3 unterscheidet sich von derjenigen der Fig. 2 dadurch, daß der Unterdruck für die erste Leitung 12a nicht mehr im Gehäuse 14a selbst, sondern extern erzeugt wird. Hierzu dient ein Unterdruckanschluß 50, der selbstverständlich in das integrierte Kanalsystem der Unterdruckbatterie 10 integriert sein kann. Der Unterdruckanschluß 50 ist zu dem 2/2-Magnetventil 24a geführt, um ihn mit der ersten Leitung 12a verbinden zu können. Der zentrale Druckluftanschluß 20a dient mit dem anderen 2/2-Magnetventil 25a jetzt nur noch zum Abblasen des Werkstücks.

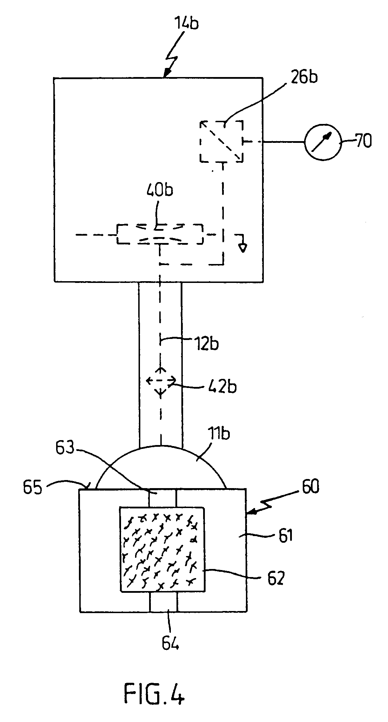

Bei der Darstellung der Fig. 4 werden wiederum die gleichen Bezugszeichen verwendet, die durch Hinzufügen eines "b" gekennzeichnet sind.

Wie man erkennt, ist in Fig. 4 die Variante der Fig. 2 herangezogen worden, obwohl dies nur als Beispiel zu verstehen ist.

Das besondere bei der Anordnung der Fig. 4 ist, daß der Sauggreifer 11b ein bestimmungsgemäß fluiddurchströmtes Bauteil, nämlich ein Luftfilter 60 ergreift.

Das Luftfilter 60 umfaßt ein Gehäuse 61 mit einem Filtereinsatz 62, zu dem eine erste Öffnung 63 sowie, auf der entgegengesetzten Seite, eine zweite Öffnung 64 führen.

Wenn nun der Sauggreifer 11b auf eine Oberfläche 65 des Luftfilters 60 aufgesetzt wird, in dem sich die erste Öffnung 63 befindet, so entsteht ein definierter Leckstrom, der durch den unterhalb des Sauggreifers 11b angelegten Unterdruck bewirkt wird, der Luft durch die zweite Öffnung 64, den Filtereinsatz 62 sowie die erste Öffnung 63 zieht. Dieser Leckstrom führt zu einem definierten Druckanstieg in der ersten Leitung 12b. Dieser Druckanstieg wird, wie bereits geschildert, im Drucksensor 26b erfaßt und kann an einem Meßgerät 70 angezeigt werden.

Ergreift nun der Sauggreifer 11b einen fehlerfreien Filter 60, so kann die Anordnung so getroffen werden, daß trotz des definierten Leckstroms eine sichere Handhabung des Filters 60 mittels Unterdruck möglich ist. Das Meßgerät 70 wird in diesem Falle jeweils eine vorbestimmten zulässigen Druckanstieg in der Leitung 12b anzeigen.

Ergreift nun der Sauggreifer 11b jedoch einen fehlerhaften Filter 60, in dem beispielsweise der Filtereinsatz 62 fehlt, so ist der Luftdurchtritt durch den Filter 60 so widerstandsarm, daß sich in der Leitung 12b kein hinreichender Unterdruck aufbauen kann. Dies wird am Meßgerät 70 angezeigt, ggf. über eine zugeordnete Alarmschaltung, um damit zu signalisieren, daß nicht nur ein sicherer Transport des Filters 60 nicht gewährleistet werden kann, sondern darüberhinaus auch der Filter 60 selbst fehlerhaft ist.

## Patentansprüche

1. Handhabungsvorrichtung mit einem Sauggreifer (11) zum Ergreifen von Werkstücken (19) mittels Unterdruck, bei dem in einem mit dem Sauggreifer (11) verbundenen Gehäuse (14) Mittel zum Erzeugen oder Zuführen eines Unterdrucks sowie mindestens ein Ventil (24) angeordnet sind, mittels dessen der Sauggreifer (11) mit dem Unterdruck beaufschlagbar ist, dadurch gekennzeichnet, daß das Gehäuse (14) scheibenartig ausgebildet und mit einem integrierten Kanalsystem (21) versehen ist, das einen Verteilerkanal (22) aufweist, der so an eine Oberfläche (17) des Gehäuses (14) geführt ist, daß das Gehäuse (14) mit weiteren Gehäusen (14', 14'', 14''') zu einem Ventilbatterieblock zusammenfügbar ist, bei dem die Verteilerkanäle (22) der Gehäuse (14, 14', 14'', 14''') aneinanderstoßen und die Kanalsysteme (21) miteinander kommunizieren.

2. Handhabungsvorrichtung nach Anspruch 1, dadurch gekennzeichnet, daß das Gehäuse (14) einen fensterartigen Ausschnitt (23) aufweist, in dem die Ventile (24, 25) angeordnet sind.

3. Handhabungsvorrichtung nach Anspruch 1 oder 2, dadurch gekennzeichnet, daß Mittel zum Einstellen des Unterdrucks vorgesehen sind.

4. Handhabungsvorrichtung nach einem der Ansprüche 1 bis 3, dadurch gekennzeichnet, daß das Gehäuse (14) einen Drucksensor (26) enthält, der an eine zum Sauggreifer (11) führende Unterdruckleitung (12) angeschlossen ist.

5. Handhabungsvorrichtung nach Anspruch 4, dadurch gekennzeichnet, daß der Drucksensor (26) mit einem Regler zum Einstellen des Unterdrucks in Verbindung steht.

6. Handhabungsvorrichtung nach einem oder mehreren der Ansprüche 1 bis 5, dadurch gekennzeichnet, daß das Ventil, mittels dessen der Sauggreifer mit Unterdruck beaufschlagbar ist, ein Servo-Ventil ist.

7. Handhabungsvorrichtung nach einem oder mehreren der Ansprüche 1 bis 6, dadurch gekennzeichnet, daß das Gehäuse (14) eine Venturi-Düse (40) enthält, deren Druckanschluß über ein Ventil (24) an den mit Druckluft beaufschlagten Verteilerkanal (22) anschließbar ist und deren Sauganschluß mit dem Sauggreifer (11) in Verbindung steht.

## Claims

1. Handling device with a suction gripper (11) for taking up workpieces (19) by means of negative pressure, in which means for producing or supplying a negative pressure and at least one valve (24) are arranged in a housing (14), which is connected to the suction gripper (11), by means of which valve the suction gripper (11) can be acted upon by the negative pressure, characterised in that the housing (14) is formed like a disc and provided with an integrated channel system (21) comprising a distributor channel (22) which runs along a surface (17) of the housing (14) such that the housing (14) can be joined to other housings (14', 14'', 14''') to form a valve battery unit, in which the distributor channels (22) of the housings (14, 14', 14'', 14''') adjoin and the channel systems (21) communicate with one another.

2. Handling device according to claim 1, characterised in that the housing (14) has a window-like opening (23), in which the valves (24, 25) are arranged.

3. Handling device according to claim 1 or 2, characterised in that means for adjusting the negative pressure are provided.

4. Handling device according to one of claims 1 to 3, characterised in that the housing (14) contains a pressure sensor (26), which is connected to a negative pressure line (12) leading to the suction gripper (11).

5. Handling device according to claim 4, characterised in that the pressure sensor (26) is connected to a controller for adjusting the negative pressure.

6. Handling device according to one or more of claims 1 to 5, characterised in that the valve by means of which the suction gripper can be acted upon by negative pressure is a servo valve.

7. Handling device according to one or more of claims 1 to 6, characterised in that the housing (14) contains a venturi tube (40), the pressure connection of which can be connected via a valve (24) to the distributor channel (22), to which compressed air is admitted, and the suction connection of which is connected to the suction gripper (11).

## Revendications

1. Dispositif de manipulation, comportant une ventouse (11) pour saisir des pièces (19) par dépression, dans lequel dans un boîtier (14) relié à la ventouse (11), sont agencés des moyens pour engendrer ou amener une dépression, ainsi qu'au moins une soupape (24), au moyen de laquelle la ventouse (11) peut être alimentée en dépression,
caractérisé en ce que le boîtier (14) est réalisé sous forme de plaque et est muni d'un système intégré (21) de canaux, qui présente un canal de distribution (22), qui est guidé sur une surface (17) du boîtier (14), de sorte que le boîtier (14) peut être joint à d'autres boîtiers (14',14'', 14''') en un bloc de batteries de soupapes, dans lequel les canaux de distribution (22) des boîtiers (14,14',14'',14''') sont jointifs et les systèmes de canaux (21) communiquent les uns avec les autres.

2. Dispositif de manipulation selon la revendication 1,
caractérisé en ce que le boîtier (14) comporte une découpe (23) en forme de fenêtre, dans laquelle sont agencées les soupapes (24,25).

3. Dispositif de manipulation selon la revendication 1 ou 2,
caractérisé en ce que des moyens pour régler la dépression sont prévus.

4. Dispositif de manipulation selon une des revendications 1 à 3,
caractérisé en ce que le boîtier (14) comporte un capteur de pression (26) qui est raccordé à un conduit à dépression (12) menant à la ventouse (11).

5. Dispositif de manipulation selon la revendication 4,
caractérisé en ce que le capteur de pression (26) est en liaison avec un régulateur pour régler la dépression.

6. Dispositif de manipulation selon une ou plusieurs des revendications 1 à 5,
caractérisé en ce que la soupape, au moyen de laquelle la ventouse peut être alimentée en dépression, est une servo-soupape.

7. Dispositif de manipulation selon une ou plusieurs des revendications 1 à 6,
caractérisé en ce que le boîtier (14) comporte un venturi (40), dont le raccord de pression peut être raccordé, par l'intermédiaire d'une soupape (24), au canal de distribution (22) alimenté en air comprimé et dont le raccord d'aspiration est relié à la ventouse (11).
